# EUROPÄISCHE PATENTSCHRIFT

(11) **EP 0 708 579 B1**
(45) Veröffentlichungstag und Bekanntmachung des Hinweises auf die Patenterteilung: **28.03.2001**
(21) Anmeldenummer: 95116284.1
(22) Anmeldetag: 16.10.1995
(51) Int. Cl.: H05B 41/285

(54) **Verfahren zum Betrieb einer Entladungslampe und Schaltungsanordnung zum Betrieb einer Entladungslampe**
Method and apparatus for driving a discharge lamp
Procédé et appareil pour alimenter une lampe à décharge

(30) Priorität: 19.10.1994 DE 4437453
(43) Veröffentlichungstag der Anmeldung: 24.04.1996
(73) Patentinhaber: Patent-Treuhand-Gesellschaft für elektrische Glühlampen mbH, 81543 München (DE)
(72) Erfinder: Bernitz, Franz, D-82008 Unterhaching (DE); Niedermeier, Peter, D-80995 München (DE); Huber, Andreas, D-82216 Maisach (DE); Kornatz, Hendrik, D-13088 Berlin (DE)

(56) Entgegenhaltungen:
- EP-A- 0 386 990
- EP-A- 0 482 705

## Beschreibung

Die Erfindung betrifft ein Verfahren zum Betrieb einer Entladungslampe gemäß dem Oberbegriff des Patentanspruchs 1 sowie eine Schaltungsanordnung zum Betrieb einer Entladungslampe gemäß dem Oberbegriff des Patentanspruchs 9.

Ein derartiges Betriebsverfahren wird beispielsweise in dem Aufsatz "Zum Hochfrequenzbetrieb von Halogen-Metalldampflampen kleiner Leistung" von E. Statnic, veröffentlicht im Band 12 der Technisch-wissenschaftlichen Abhandlungen der OSRAM-Gesellschaft, Seiten 395-411, Springer-Verlag Berlin, Heidelberg 1986, beschrieben. In diesem Aufsatz wird vorgeschlagen, Hochdruckentladungslampen, insbesondere Halogen-Metalldampflampen kleiner Leistung, mit einer frequenzmodulierten Wechselspannung, die im mittelfrequenten Bereich zwischen ca. 10 kHz und 500 kHz angesiedelt ist und einen Modulationsfrequenzhub von ±10-15 % der Betriebsfrequenz aufweist, zu betreiben. Die Verwendung von Betriebsfrequenzen im kHz-Bereich ermöglicht den Bau kompakter elektronischer Vorschaltgeräte mit geringen Verlustleistungen. Dadurch wird das Einsatzgebiet von kleinen Hochdruckentladungslampen auf Leuchten erweitert, die vorher anderen Lampentypen, wie beispielsweise den Halogenglühlampen, vorbehalten waren.

Allerdings zeigen Hochdruckentladungslampen beim Betrieb mit höheren Wechselstromfrequenzen instabile Betriebszustände, die durch das Auftreten von akustischen Resonanzen, das sind stehende Schallwellen, im Entladungsmedium verursacht werden. Besonders starke akustischen Resonanzen treten auf, wenn die Frequenz des Lampenwechselstroms mit einer der Resonanzfrequenzen der stehenden Schallwellen übereinstimmt. Die Lage der Resonanzfrequenzen hängt von der Entladungsgefäßgeometrie und von der Schallgeschwindigkeit im Entladungsmedium ab. Um ein Flimmern oder gar ein Verlöschen des Entladungsbogens, verursacht durch das Auftreten akustischer Resonanzen, zu vermeiden, werden die Hochdruckentladungslampen üblicherweise mit einer frequenzmodulierten Wechselspannung betrieben. Die Resonanzfrequenzen der akustischen Resonanzen werden bei der Frequenzmodulation so schnell durchlaufen, daß sich akustische Resonanzen nur in geringem Maße ausbilden können. Alterungsprozesse sowie Toleranzen bei der Fertigung verleihen aber jeder Lampe eine eigene Charakteristik, auf die herkömmliche elektronische Vorschaltgeräte nur in begrenztem Umfang durch Anpassung der Betriebsparameter reagieren können.

Die europäische Offenlegungsschrift EP 0 482 705 A2 beschreibt eine Schaltungsanordnung zum Betrieb einer Entladungslampe, die einen Wechselrichter mit einer Ansteuerungsvorrichtung aufweist. Die Ansteuerungsvorrichtung generiert Steuersignale für den Wechselrichter, die einen Signalanteil aufweisen, der ein Maß für schnelle Änderungen der Leistungsaufnahme der Lampe ist.

Die Offenlegungsschrift EP 0 386 990 A2 offenbart eine Schaltungsanordnung und ein Betriebsverfahren für eine Entladungslampe. Zur Steigerung der Effizienz und zur Begradigung des Entladungsbogens wird die Entladungslampe mit einem frequenz-modulierten Wechselstrom betrieben.

Es ist die Aufgabe der Erfindung, ein verbessertes Verfahren zum Betrieb einer Entladungslampe an einem elektronischen Vorschaltgerät anzugeben, das einen stabilen, flimmerfreien Lampenbetrieb ermöglicht, sowie eine Schaltungsanordnung zum Betrieb einer Entladungslampe bereitzustellen, die einen flimmerfreien Lampenbetrieb, mit optimal auf die jeweilige Lampe abgestimmten Betriebsparametern, erlaubt.

Diese Aufgabe wird erfindungsgemäß durch die kennzeichnenden Merkmale der Ansprüche 1 bzw. 9 gelöst. Besonders vorteilhafte Ausführungen der Erfindung sind in den abhängigen Ansprüchen beschrieben.

Bei dem crfindungsgemäßen Betriebsverfahren werden die Entladungslampen mit einem frequenzmodulierten Wechselstrom betrieben, wobei das Vorschaltgerät während des Lampenbetriebs, in einem vorgegebenen Frequenzbereich, selbsttätig die für den stabilen Lampenbetrieb günstigen Wechselstromfrequenzen ermittelt und anschließend nur noch für den stabilen Lampenbetrieb günstige Wechselstromfrequenzen zum Betrieb der Lampe ausnutzt. Nach dem Durchzünden der Entladungslampe testet das Vorschaltgerät innerhalb des vorgegebenen Frequenzintervalls eine bestimmte Anzahl diskreter Frequenzen auf ihre Eignung für den stabilen Lampenbetrieb, indem es schrittweise für eine gewisse Zeitspanne die zu testende Lampenstromfrequenz einstellt und eine für den Lampenbetrieb charakteristische elektrische Größe überwacht. Nach Beendigung der Testphase wird die Entladungslampe in einem neuen Frequenzfenster betrieben, das nur noch die für den stabilen Lampenbetrieb günstigen Wechselstromfrequenzen enthält. Vorteilhafterweise umfaßt dieses neue Frequenzfenster nicht alle während der Testphase als tauglich ermittelten Wechselstromfrequenzen, sondern wird von dem größten zusammenhängenden Bereich der für den stabilen Lampenbetrieb günstigen Wechselstromfrequenzen gebildet. Das erfindungsgemäße Verfahren ermöglicht selbst dann einen flimmerfreien Lampenbetrieb, wenn sich die Lampeneigenschaften infolge des Alterungsprozesses verändern.

Realisiert wird das erfindungsgemäße Lampenbetriebsverfahren mit Hilfe einer Schaltungsanordnung, die erfindungsgemäß einen Mikrocontroller, insbesondere einen programmierbaren Mikrocontroller enthält, der selbsttätig eine Testphase durchführt, während der die Wechselstromfrequenzen, die einen stabilen Lampenbetrieb ermöglichen, ermittelt und gespeichert werden, und der zumindest während der Testphase eine den stabilen bzw. instabilen Lampenbetrieb charakterisierende elektrische Größe überwacht, und die Schaltungsanordnung derart steuert, daß die Entladungslampe nach Beendigung der Testphase in einem Frequenzfenster betrieben wird, das nur Wechselstromfrequenzen enthält, die einen stabilen Lampenbetrieb gewährleisten. Die erfindungsgemäße Schaltungsanordnung besitzt einen Wechselrichter, insbesondere einen fremdgesteuerten Halbbrückenwechselrichter, mit einem als Resonanzkreis ausgebildeten LC-Ausgangskreis, in den die zu betreibende Entladungslampe integriert ist. Der programmierbare Mikrocontroller übernimmt die Ansteuerung des Wechselrichters und überwacht ferner mittels einer Sensoreinheit den Spannungsabfall am Koppelkondensator, der in den Resonanzkreis integriert ist und vom Lampenstrom durchflossen wird. Da Instabilitäten des Entladungsbogens sich unmittelbar auf den Lampenstrom und damit auch auf die Spannung am Koppelkondensator auswirken, ist der Spannungsabfall am Koppelkondensator, insbesondere der niederfrequente Spannungsanteil, ein Indikator für einen stabilen bzw. instabilen Lampenbetrieb. Die Schaltfrequenz des Halbbrückenwechselrichters und damit auch die Frequenz des durch die Entladungslampe fließenden Wechselstroms werden vom Mikrocontroller mittels eines Pulsweitenmodulationssignals gesteuert. Während einer Testphase veranlaßt der Mikrocontroller den Halbbrückenwechselrichter innerhalb eines vorgegebenen Frequenzintervalls im LC-Ausgangskreis diskrete Wechselstromfrequenzen zu generieren, um die für den flimmerfreien Lampenbetrieb günstigen Wechselstromfrequenzen zu ermitteln und zu speichern. Am Ende der Testphase bestimmt der programmierbare Mikrocontroller aus den getesteten Wechselstromfrequenzen ein Frequenzfenster, das nach Beendigung der Testphase zum Lampenbetrieb verwendet wird. Dieses Frequenzfenster besteht aus dem größten zusammenhängenden Bereich von für den stabilen Lampenbetrieb als tauglich ermittelten Wechselstromfrequenzen.

Wie hier angedeutet und weiter unten anhand von Ausführungsbeispielen näher erläutert werden wird, ermöglicht die erfindungsgemäße Schaltungsanordnung eine optimale Anpassung der Betriebsparameter des Vorschaltgerätes an die zu betreibende Entladungslampe. Insbesondere kann also mit Hilfe eines programmierbaren Mikrocontrollers ein flimmerfreier Lampenbetrieb gewährleistet werden. Der Mikrocontroller kann aber auch weitere Steuerungsaufgaben übernehmen, die bei einem herkömmlichen elektronischen Vorschaltgerät mittels analoger Schaltungstechnik realisiert werden.

Das erfindungsgemäße Verfahren zum Betrieb einer Entladungslampe sowie die erfindungsgemäße Schaltungsanordnung zur Durchführung dieses Betriebsverfahrens werden nachstehend anhand zweier bevorzugter Ausführungsbeispiele näher erläutert. Es zeigen:
- Figur 1: Das Grundschema der erfindungsgemäßen Schaltungsanordnung
- Figur 2: Den ersten Teil der erfindungsgemäßen Schaltungsanordnung entsprechend des ersten bevorzugten Ausführungsbeispiels
- Figur 3: Den zweiten Teil der erfindungsgemäßen Schaltungsanordnungen entsprechend der beiden bevorzugten Ausführungsbeispiele
- Figur 4: Den ersten Teil der erfindungsgemäßen Schaltunsanordnung entsprechend des zweiten bevorzugten Ausführungsbeispiels

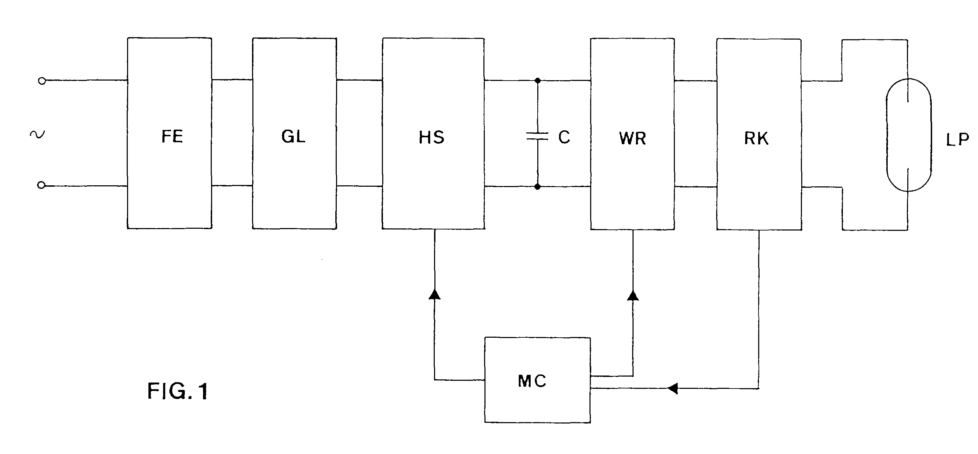

In Figur 1 ist der Aufbau der erfindungsgemäßen Schaltungsanordnung stark schematisiert dargestellt. Die erfindungsgemäße Schaltungsanordnung entsprechend des ersten Ausführungsbeispiels wird an Netzspannung betrieben und umfaßt, ausgehend vom Netzspannungseingang, ein Funkentstörungsfilter FE, einen Gleichrichter GL, einen Hochsetzsteller HS, einen Zwischenkreiskondensator C, einen fremdgesteuerten Wechselrichter WR, insbesondere einen Halbbrückenwechselrichter, einen LC-Ausgangskreis RK, einen Mikrocontroller MC sowie eine Entladungslampe LP, insbesondere eine Hochdruckentladungslampe. Anhand der schematischen, vereinfachten Darstellung in Figur 1 wird zunächst das erfindungsgemäße Betriebsverfahren näher erläutert.

Der Hochsetzsteller HS wird über das Funkentstörungsfilter FE und den Brückengleichrichter GL mit der gleichgerichteten Netzspannung versorgt und erzeugt am Zwischenkreiskondensator C eine hohe Gleichspannung geringer Welligkeit und gewährleistet ferner eine sinusförmige Netzstromentnahme. Aus dem Zwischenkreiskondensator C bezieht der Halbbrückenwechselrichter WR seine Versorgungsspannung. Der vom Halbbrückenwechselrichter WR mit einem hochfrequenten Wechselstrom gespeiste LC-Ausgangskreis RK ist als Resonanzkreis ausgebildet, in den auch die Hochdruckentladungslampe LP integriert ist. Der Mikrocontroller MC überwacht mittels seiner Verbindung zum Resonanzkreis RK den Lampenstrom und kontrolliert die Schaltfrequenz des Wechselrichters WR und damit die Frequenz des Lampenwechselstroms. Über einen Anschluß zum Hochsetzsteller HS kann der Mikrocontroller MC diesen abschalten und die Schaltungsanordnung auf diese Weise stillegen.

Nach dem Einschalten der Versorgungsspannung veranlaßt der Mikrocontroller MC den Halbbrückenwechselrichter WR den Resonanzkreis RK mit einer frequenzmodulierten Wechselspannung zu beaufschlagen. Zunächst wird die Frequenz der vom Wechselrichter WR generierten Wechselspannung mittels des Mikrocontrollers MC im Frequenzintervall von ca. 20 kHz bis 25 kHz in 16 diskreten Schritten variiert. Dabei erfolgt die komplette Auf- und Abmodulation der vom Wechselrichter WR erzeugten Wechselspannung innerhalb einer Netzspannungshalbwelle, d.h., innerhalb von 10 ms. Dieser Betriebszustand wird im folgenden als "Normalbetrieb" bezeichnet. Nach dem Durchzünden der Entladungslampe LP und nach beendeter Lampenanlaufphase leitet der Mikrocontroller MC selbsttätig eine Testphase ein. Im Verlauf dieser Testphase behält der Wechselrichter WR jede der obengenannten 16 Wechselstromfrequenzen für einen längeren Zeitraum, d. h., für jeweils 5 s bei. Das heißt, für jeweils 5 s wird die Entladungslampe LP mit einer der 16 Wechselstromfrequenzen betrieben. Der Mikrocontroller MC überwacht währenddessen den Lampenstrom und speichert ab, ob bei der betreffenden Wechselstromfrequenz ein stabiler oder ein instabiler Lampenbetrieb stattfindet. Zwischen jedem Wechsel der Testfrequenz kehrt der Wechselrichter WR für jeweils 5 s in den Normalbetrieb zurück. Am Ende der Testphase ermittelt der Mikrocontroller MC aus der Menge der Wechselstromfrequenzen, die einen stabilen Lampenbetrieb ermöglichten, ein neues Frequenzfenster für die Frequenzmodulation der Wechselrichterausgangsspannung bzw. des Lampenwechselstromes. Dieses neue Frequenzfenster ist durch den größten zusammenhängenden Bereich von Testfrequenzen, die einen stabilen Lampenbetrieb gewährleisten, definiert. Die Entladungslampe LP wird dann, nach Beendigung der Testphase, vom Wechselrichter WR mit einem frequenzmodulierten Wechselstrom gespeist, der nur noch die im neuen Frequenzfenster gelegenen Testfrequenzen umfaßt. Die komplette Auf- und Abmodulation des vom Wechselrichter generierten Wechselstroms bzw. des Lampenstroms erfolgt auch im neuen Frequenzfenster innerhalb einer Netzspannungshalbwelle, d. h., innerhalb von 10 ms. Mit anderen Worten, es findet nach Beendigung der Testphase ein "Normalbetrieb" mit den innerhalb des neuen Frequenzfensters gelegenen Testfrequenzen, die einen stabilen Lampenbetrieb gewährleisten, statt.

Zur Realisierung des oben beschriebenen, erfindungsgemäßen Betriebsverfahrens ist ein programmierbarer Mikrocontroller vom Typ ST6265 der Firma SGS Thomson in die erfindungsgemäße Schaltungsanordnung integriert. Die Eigenschaften dieses Mikrocontrollers sind in Tabelle I aufgelistet. Für weitere Informationen sei auf die zugehörigen einschlägigen Datenblätter der Firma SGS Thomson verwiesen. Der Ablauf und die Auswertung der Testphase werden durch das im oben erwähnten Mikrocontroller installierte Assembler-Programm bestimmt.

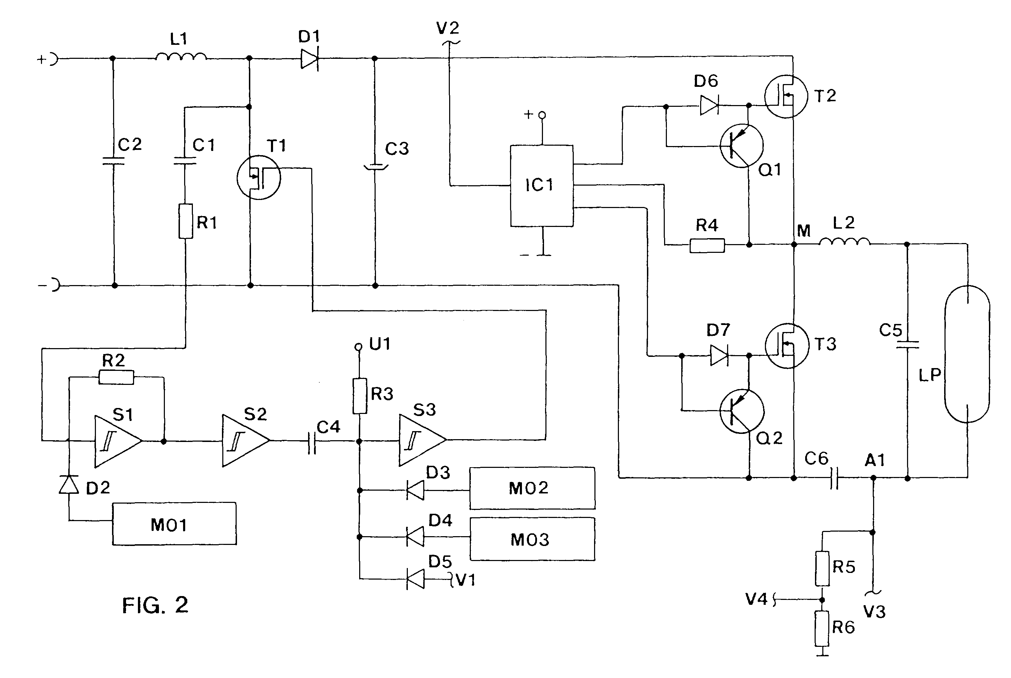

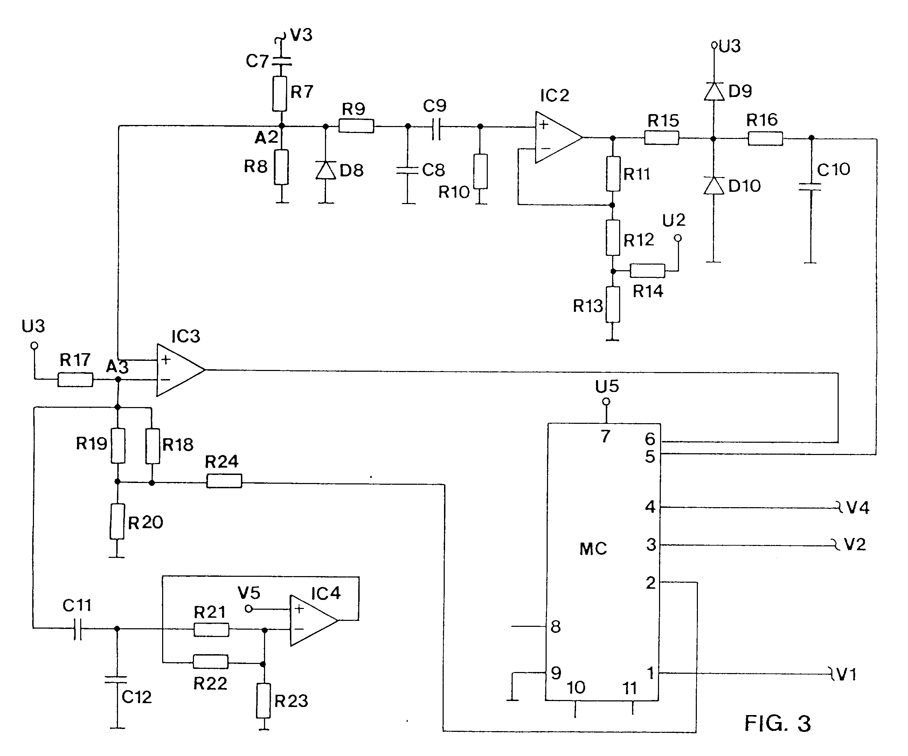

Die Figuren 2 und 3 zeigen die Vernetzung des ST6265-Mikrocontrollers mit der erfindungsgemäßen Schaltungsanordnung anhand des ersten bevorzugten Ausführungsbeispiels. Die Schaltungsanordnung gemäß dieses ersten bevorzugten Ausführungsbeipiels besitzt einen Hochsetzsteller, der von dem Feldeffekttransistor T1, der Induktivität L1, der Diode D1, dem RC-Glied R1, C1, einem Eingangskondensator C2 und einer Ansteuerungsvorrichtung gebildet wird. Am Ausgang des Hochsetzstellers befindet sich der Zwischenkreiskondensator C3. Der Hochsetzsteller wird über ein (in Figur 2 nicht abgebildetes) Funkentstörungsfilter mit der durch einen Brükkengleichrichter (in Figur 2 nicht abgebildet) gleichgerichteten Netzspannung versorgt. Das Funkentstörungsfilter und der Brückengleichrichter wurden hier nur der Übersichtlichkeit halber nicht mehr dargestellt. Der Aufbau eines Funkentstörungsfilter ist beispielsweise in der Offenlegungsschrift DE 41 37 207 offenbart. Die hier nur schematisch dargestellte Ansteuerungsvorrichtung des Hochsetzstellers umfaßt eine Spannungsbegrenzungseinheit MO1, eine Spannungsregelungseinheit M02, eine Leistungsregelungseinheit M03 und eine Verbindung V1 zum Port 1 des Mikrocontrollers ST6265, die mittels Dioden D2, D3, D4, D5 in Form einer ODER-Schaltung über Schmitt-Trigger S1, S2, S3, unter Verwendung weiterer Bauelemente R2, R3, C4 sowie einer Hilfsspannungsquelle U1, mit dem Gate des Feldeffekttransistors T1 und mit dem RC-Glied R1, C1 verbunden sind. Die Ansteuerungsvorrichtung des Hochsetzstellers ist beispielsweise in der Patentschrift EP 0 256 231 beschrieben. Die Regelungseinheiten MO1, M02, M03 sind ebenfalls Stand der Technik und bedürfen daher keiner ausführlichen Beschreibung. Die Leistungsregelungseinheit M03 ist beispielsweise in der Offenlegungsschrift EP 0 496 246 detailiert erläutert. Die Spannungsregelungseinheit M02 wird üblicherweise als PI-Regler realisiert, wobei die Regelgröße über einen parallel zum Zwischenkreiskondensator C3 angeordneten Spannungsteiler abgegriffen wird. Die Spannungsbegrenzungseinheit MO1 ist beispielsweise mittels eines als Komparator beschalteten Operationsverstärkers realisierbar, der den Spannungsabfall am bereits oben bei der Spannungsregelung erwähnten, parallel zum Zwischenkreiskondensator C3 angeordneten Spannungsteiler überwacht.

Der Zwischenkreiskondensator C3 ist parallel zum Eingang des Halbbrükkenwechselrichters geschaltet. An ihm liegt die Versorgungsspannung für den Halbbrückenwechselrichter an. Der Halbbrückenwechselrichter besteht im wesentlichen aus zwei in einer Halbbrücke verschalteten Feldeffekttransistoren T2, T3 und einem IC-Baustein IC1, der über den Verknüpfungspunkt V2 mit dem Autoreload-Timer-Ausgang 3 des Mikrocontrollers MC verbunden ist und zur Ansteuerung der Feldeffekttransistoren T2, T3 dient.

Außerdem weist der Halbbrückenwechselrichter zwei Bipolartransistoren Q1, Q2 und zwei Dioden D6, D7 auf, die jeweils in die Gate-Ansteuerung eines Feldeffekttransistors T2 bzw. T3 integriert sind. Die Bipolartransistoren Q1, Q2 verbessern lediglich das Schaltverhalten der Feldeffekttransistoren T2, T3. An den Mittenabgriff M des Halbbrückenwechselrichters ist ein als Resonanzkreis ausgebildeter LC-Ausgangskreis angeschlossen. Der Resonanzkreis enthält eine Resonanzinduktivität L2, einen Resonanzkondensator C5 und einen Koppelkondensator C6 sowie eine Hochdruckentladungslampe LP, die parallel zum Resonanzkondensator C5 geschaltet ist. Der Mittenabgriff M ist ferner über einen Widerstand R4 mit dem IC-Baustein IC1 verbunden. Ein zwischen dem Koppelkondensator C6 und der Lampe LP liegender Abgriff A1 ist einerseits über einen geerdeten Spannungsteiler R5, R6 und über den Verknüpfungspunkt V4 zu einem Eingang 4 des Mikrocontrollers geführt und andererseits über den Verknüpfungspunkt V3 mit einer Sensoreinheit (Figur 3) verbunden. Diese Sensoreinheit dient zur Erfassung der niederfrequenten Schwankungen des Lampenstromes, die als Indikator für einen unruhig brennenden Entladungsbogen angesehen werden können.

Die vorgenannte Sensoreinheit umfaßt, ausgehend vom Verknüpfungspunkt V3, einen Kondensator C7, einen geerdeten Spannungsteiler R7, R8, eine schnelle Gleichrichterdiode D8 und ein von den Kondensatoren C8, C9 und den Widerständen R9, R10 gebildetes Bandpaßfilter sowie eine nachgeschaltete, aus dem Operationsverstärker IC2 und den Spannungsteilerwiderständen R11, R12, R13, R14 sowie der Hilfspannungsquelle U2 bestehende Verstärkeranordnung. Über eine von den Dioden D9, D10, der Hilfspannungsquelle U3 und den Widerständen R15, R16 gebildete Spannungsbegrenzungsvorrichtung und über einen geerdeten Entstörungskondensator C10 ist der Ausgang der Sensoreinheit mit dem Eingang 5 des Mikrocontrollers verbunden.

Die erfindungsgemäße Schaltungsanordnung besitzt ferner eine Lampen-Lösch-Erkennungs-Einheit, die an den Mittenabgriff A2 des Spannungsteilers R7, R8 angeschlossen ist. Diese schnell ansprechende Lampen-Lösch-Erkennungs-Einheit ist erforderlich, um bei sehr heftigen Bogenunruhen, die ein Verlöschen der Lampe innerhalb von wenigen Millisekunden herbeiführen würden, den Lampenstrom weiterhin aufrechtzuerhalten. Die Lampen-Lösch-Erkennungs-Einheit ist als eine schnell reagierende Komparatorschaltung mit dazugehörender Referenzspannungserzeugung ausgeführt. Sie enthält als wesentliches Bauteil den als Komparator verschalteten Operationsverstärker IC3, dessen nichtinvertierender Eingang mit dem Mittenabgriff A2 des Spannungsteilers R7, R8 verbunden ist, während sein invertierender Eingang einerseits über Widerstände R18, R24 an den Ausgang 2 des Mikrocontrollers MC angeschlossen ist und andererseits über den Kondensator C11 mit einer aus dem Operationsverstärker IC4 und den Widerständen R21, R22, R23 sowie dem Kondensator C12 bestehenden Verstärkereinheit verbunden ist. Ferner ist der invertierende Eingang des Operationsverstärkers IC3 über den Abgriff A3 und den Widerstand R17 des Spannungsteilers R17, R19, R20 mit dem Pluspol der Hilfsspannungsquelle U3 und über die Widerstände R19, R20 mit Masse verbunden. Der nichtinvertierende Eingang des Operationsverstärkers IC4 ist über einen an den Verknüpfungspunkt V5 angeschlossenen Spannungsteiler (nicht abgebildet) zum Pluspol des Zwischenkreiskondensators C3 geführt. Der Mikrocontroller MC ist in Figur 3 nur schematisch dargestellt. Insbesondere wurden in Figur 3 nur die zum Verständnis der Erfindung wesentlichen Anschlüsse des Mikrocontrollers MC abgebildet. Die Anschlüsse 7 und 9 dienen der Spannungsversorgung des Mikrocontrollers, während am NMI-Eingang 8 des Mikrocontrollers MC ein 100 Hz-Synchronisationssignal anliegt, das am Ausgang des Brückengleichrichters GL, d. h., am Pluspol des Kondensators C2, aus der Schaltungsanordnung ausgekoppelt wird. Die Oszillatoranschlüsse 10 und 11 des Mikrocontrollers MC sind mit einem Taktgeber verbunden, der die Taktfrequenz des Mikrocontrollers MC bestimmt. Angaben zur Dimensionierung der im Ausführungsbeispiel verwendeten elektronischen Bauteile finden sich in Tabelle II.

Im folgenden wird nun die Funktionsweise des oben beschriebenen Ausführungsbeispiels zum Betrieb einer 70W-Hochdruckentladungslampe erläutert.

Nach dem Einschalten der Versorgungsspannung liegt am Eingang des Hochsetzstellers, d. h., am Kondensator C2, die vom Brückengleichrichter GL gleichgerichtete Netzspannung von ca. 230 V an. Die am Zwischenkreiskondensator C3 anliegende Ausgangsspannung des Hochsetzstellers hängt vom Tastverhältnis, d. h., vom Ein- und Ausschaltzeitpunkt sowie von der Ausschaltdauer, des Feldeffekttransistors T1 ab.

Zur Festlegung des Einschaltzeitpunktes detektiert das RC-Glied R1, C1 den Nulldurchgang des Drosselstromes von L1. Spannungsänderungen am Kondensator C1 verursachen ein Low-Eingangssignal am Schmitt-Trigger S1. Am Ausgang von S1 und am Eingang des Schmitt-Triggers S2 liegt somit ein High-Signal an, das vom Schmitt-Trigger S2 wieder in ein Low-Signal invertiert wird, so daß, nach nochmaliger Inversion durch den Schmitt-Trigger S3, am Gate des Transistors T1 ein High-Signal erzeugt wird, das den Transistor T1 einschaltet. Der Ausschaltzeitpunkt des Transistors T1 wird von der Ladezeit des Kondensators C4 bestimmt. Liegt am Kondensator C4 ein High-Potential an, so wird am Ausgang des Schmitt-Triggers S3 ein Low-Signal erzeugt und der Transistor T1 ausgeschaltet, d. h., die Schaltstrecke wird hochohmig. Der Auschaltzeitpunkt kann von den Regelungseinheiten MO1, M02, M03 beeinflußt werden. Die Ausschaltdauer hingegen hängt vom Entmagnetisierungsstrom der Drossel L1 ab. Eine Beschreibung der Funktionsweise eines Hochsetzstellers findet man beispielsweise auf der Seite 42 in dem Buch "Schaltnetzteile" von W. Hirschmann/ A. Hauenstein, herausgegeben von der Siemens AG.

Die Spannungsbegrenzungseinheit MOl überwacht die Ausgangsspannung am Zwischenkreiskondensator C3 und schaltet die Schaltungsanordnung beim Überschreiten einer Spannung von ca. 460 V ab. Während der Anlaufphase der Hochdruckentladungslampe LP reguliert die Spannungsregelungseinheit M02 die Ausgangsspannung des Hochsetzstellers am Zwischenkreiskondensator C3 auf einen Wert von ca. 440 V. Am Ende der Anlaufphase übernimmt die Leistungsregelungseinheit M03 die Regelung des Hochsetzstellers, so daß die Leistungsaufnahme der Hochdruckentladungslampe ca. 70 W entspricht.

Die nach dem Einschalten der Netzspannung am Zwischenkreiskondensator C3 anliegende Ausgangsspannung von ca. 440 V des Hochsetzstellers dient dem nachgeschalteten Halbbrückenwechselrichter als Versorgungsspannung. Zum Durchzünden der Hochdruckentladungslampe LP wird am Resonanzkondensator C5 mittels Resonanzüberhöhung die erforderliche Zündspannung für die Lampe LP bereitgestellt. Dazu stimmt der Mikrocontroller MC die Schaltfrequenz des Halbbrückenwechselrichters, über seinen Autoreload-Timer-Ausgang 3 und den IC-Baustein IC1 mittels eines Pulsweiten-Modulations-Signals (PWM-Signals), auf eine Oberwelle der Resonanzfrequenz des Resonanzkreises ab. Die Zündphase dauert ca. 300 ms. Erfolgt in dieser Zeit keine Lampenzündung, so wird die Zündphase nach ca. 5 s wiederholt. Bei weiteren Fehlversuchen wird die Schaltungsanordnung vom Mikrocontroller MC über seinen Ausgang 1 und den Verknüpfungspunkt V1 nach ca. 10 min stillgelegt. Diese Zeitabläufe sind durch das im Mikrocontroller MC installierte Assembler-Programm definiert.

Nach erfolgreicher Zündung der Hochdruckentladungslampe LP findet die Anlaufphase statt, während der die Füllungskomponenten im Entladungsgefäß verdampfen und an der Gasentladung teilnehmen. Während der Zeitdauer der Anlaufphase wird die Hochdruckentladungslampe LP vom Halbbrückenwechselrichter mit einem mittelfrequentem, frequenzmoduliertem Wechselstrom, dessen Frequenz im Bereich von ca. 20 kHz bis 25 kHz in 16 diskreten Schritten variiert, betrieben. Die vollständige Auf- und Abmodulation der Wechselstromfrequenz erfolgt, wie bereits weiter oben im Text unter dem Begriff "Normalbetrieb" erläutert, innerhalb einer Netzstromhalbwelle, d. h., innerhalb von 10 ms. Die 16 Frequenzschritte werden vom Assembler-Programm des Mikrocontrollers bestimmt. Das am NMI-Eingang 8 des Mikrocontrollers MC anliegende 100 Hz-Synchronisationssignal gewährleistet dabei die vollständige Auf- und Abmodulation der Wechselstromfrequenz innerhalb einer Netzstromhalbwelle. Die Anzahl der für die Frequenzmodulation möglichen Frequenzschritte ist durch die Taktfrequenz des Mikrocontrollers begrenzt. Die Frequenz des Lampenstromes wird von der Schaltfrequenz der Halbbrückentransistoren T2, T3 bestimmt, die ihrerseits mit Hilfe eines vom Mikrocontroller MC generierten und dem für die Ansteuerung der Feldeffekttransistoren T2, T3 zuständigen IC-Baustein IC1 zugeführten Pulsweiten-Modulation-Signals eingestellt wird. Die Funktionsweise eines Halbbrückenwechselrichters und die Steuerung der Schaltfrequenz mittels der Pulsweiten-Modulation soll hier nicht näher beschrieben werden. Hierzu sei beispielsweise auf das Buch "Schaltnetzteile" von W. Hirschmann/ A. Hauenstein, Seite 62-64, Hrsg. Siemens AG verwiesen.

Das Pulsweiten-Modulations-Signal für den Halbbrückenwechselrichter wird vom Autoreload-Timer, der Bestandteil des Mikrocontrollers MC ist, generiert. Der Autoreload-Timer besitzt einen 8-Bit-Aufwärtszähler mit einem 7-Bit-Vorteiler und einem Taktmultiplexer. Bei der Erzeugung eines kontinuierlichen PWM-Signals am Autoreload-Timer-Ausgang 3 des Mikrocontrollers MC muß bei jedem Zählerüberlauf ein Vorladewert eingestellt werden. Das übernimmt eine Logik, die den entsprechenden Wert aus dem Reload-Register in den Zähler lädt. Ein Autoreload-Status-Control-Register legt über Signal-Takt und Vorteiler die Frequenz des Autoreload-Counters fest. Im Reload/Capture-Register wird der vorgenannte Vorladewert gespeichert. Bei diesem Zählwert wird der Autoreload-Timer-Ausgang 3 des Mikrocontrollers MC auf "High" gesetzt. Das Compare-Register enthält den Compare-Wert. Beim Erreichen des Compare-Wertes wird der Autoreload-Timer-Ausgang 3 des Mikrocontrollers MC auf "Low" gesetzt. Das bedeutet, daß während der Autoreload-Counter vom Vorladewert auf den Compare-Wert hochzählt, vom Autoreload-Timer-Ausgang 3 des Mikrocontrollers MC ein High-Signal ausgegeben wird und während des Hochzählens vom Compare-Wert auf den maximalen Zählwert (Zählerüberlauf) des Counters ein Low-Signal vom Autoreload-Timer-Ausgang 3 des Mikrocontrollers MC an den Steuerbaustein IC1 des Halbbrückenwechselrichters weitergegeben wird. Bei Erreichen des maximalen Zählwertes wird der Autoreload-Counter auf den Vorladewert zurückgesetzt. Der Vorlade- und der Compare-Wert des Autoreload-Timers können durch eine Assembler-Programmierung des Mikrocontrollers MC gesteuert werden. Auf diese Weise lassen sich die Zeitdauer der High- und Low-Signale am Autoreload-Timer-Ausgang 3 des Mikrocontrollers MC und damit auch die Schaltfrequenz des Halbbrückenwechselrichters kontrollieren.

Am Ende der Anlaufphase, nachdem alle Füllungsbestandteile im Entladungsgefäß an der Gasentladung teilhaben, leitet der Mikrocontroller MC, programmgesteuert, die bereits weiter oben beschriebene "Testphase" ein. Hierzu werden über den Autoreload-Timer-Ausgang 3 des Mikrocontrollers MC, wie bereits weiter oben im Text erläutert, die 16 Test- bzw. Modulationsfrequenzen sukzessive für jeweils 5 s eingestellt und währenddessen der Lampenstrom überwacht. Beim Wechsel zwischen zwei Testfrequenzen kehrt die Schaltungsanordnung für ca. 5 s in den ebenfalls oben beschriebenen sogenannten "Normalbetrieb" zurück. Während der Testphase detektiert die über den Verknüpfungspunkt V3 an den Abgriff A1 angeschlossene und mit dem Eingang 5 des Mikrocontrollers MC verbundene Sensoreinheit für jede eingestellte Testfrequenz den Spannungsabfall am Koppelkondensator C6. Der Spannungsbfall am Koppelkondensator C6 reagiert sehr empfindlich auf Schwankungen des Lampenstromes.

Im folgenden werden nun diese Sensoreinheit und die Lampen-Lösch-Erkennungseinheit sowie deren Zusammenwirken mit dem Mikrocontroller MC näher beschrieben.

Der unmittelbar mit dem Abgriff A1 verbundene Kondensator C7 filtert den Gleichspannungsanteil aus dem Sensorsignal heraus, so daß am Abgriff A2 ein reines Wechselspannungssignal anliegt, dessen Frequenz mit der des Lampenstromes übereinstimmt. Dieses Wechselspannungssignal ist den gleichen Schwankungen wie der Lampenstrom unterworfen. Es weist außerdem eine 100 Hz-Welligkeit auf, die von der Netzspannungsgleichrichtung verursacht und über den Hochsetzsteller und den Wechselrichter auf die Koppelkondensatorspannung übertragen wird.

Die von der Sensoreinheit auszuwertende Spannung wird vom Spannungsteiler R7, R8 im Verhältnis 1:10 heruntergeteilt und durch die Diode D8 gleichgerichtet. Der daran angeschlossene Tiefpaß R9, C8 bildet zusammen mit dem folgenden Hochpaß C9, R10 ein Bandpaßfilter, das Wechselspannungen im Frequenzbereich von ca. 0,5 Hz bis 15 Hz am geringsten bedämpft. Schwankungen des Entladungsbogens in diesem Frequenzband werden vom Betrachter einer Lichtquelle als besonders unangenehm empfunden. Der nachgeschaltete Operationsverstärker IC2 verstärkt die Spannung um den Faktor 151 und die aus der Hilfsspannungsquelle U2 sowie den Widerständen R12, R13, R14 bestehende Zusatzschaltung verringert die Ausgangsspannung des Operationsverstärkers um einen Wert, der durch das Widerstandsverhältnis von R13/R14 und durch U2 bestimmt ist. Die Hilfsspannung U3 zusammen mit den Dioden D9, D10 und den Widerständen R15, R16 dienen zur Spannungsbegrenzung und der Kondensator C10 zur Entstörung des Eingangssignals für den Eingang 5 des Mikrocontrollers MC. Die Amplitude dieses Eingangssignals liegt im Bereich von 0 V bis 5 V.

Der Mikrocontroller MC nimmt programmgesteuert eine Auswertung dieses Eingangssignals vor.

Während der Testphase werden vom Mikrocontroller MC für jede der sechzehn Testfrequenzen vierzig Messungen, jeweils im Abstand von 20 ms, durchgeführt. Unterscheiden sich Maximum und Minimum dieser vierzig Meßsignale am Eingang 5 des Mikrocontrollers MC um mehr als einen vom Programm vorgegebenen Wert, hier 0,78 V, oder reagiert die Lampen-Lösch-Erkennungseinheit, so wird die zugehörende Testfrequenz als ungünstig für den Lampenbetrieb gewertet und im Programm ein für diese Testfrequenz spezifiziertes Bit auf "1" gesetzt. Jede der vierzig, im 20 ms-Takt durchgeführten Messungen wird im Maximum des der Koppelkondensatorspannung überlagerten 100 Hz-Rippelsignals vorgenommen. Auf diese Weise wird die 100 Hz-Welligkeit aus dem Meßsignal digital herausgefiltert. Das am NMI-Eingang 8 des Mikrocontrollers MC anliegende Synchronisationssignal ermöglicht dabei die Synchronisation der vierzig Meßzeitpunkte mit dem von der Netzspannungsgleichrichtung herrührenden 100 Hz-Rippelsignal.

Für die sechzehn Testfrequenzen sind im Mikrocontroller MC insgesamt zwei 8-Bit-Register bereitgestellt. Das zur jeweiligen Testfrequenz gehörende Bit enthält eine "0", falls bei dieser Frequenz ein flimmerfreier Lampenbetrieb stattfindet und ist auf "1" gesetzt, wenn akustische Resonanzen auftreten. Am Ende der Testphase wertet das Programm die Eintragungen in diesen zwei 8-Bit-Registern aus. Die Modulation des Lampenstromes wird nach Beendigung der Testphase nicht mit allen als günstig ermittelten Testfrequenzen durchgeführt, sondern das Programm legt ein neues, möglichst großes Frequenzintervall fest, das ausschließlich Testfrequenzen umfaßt, deren zugehörendes Bit den Eintrag "0" enthält. Dieses neue Frequenzfenster ist durch die größte auftretende Anzahl benachbarter, flimmerfreier Testfrequenzen definiert. Die Frequenzmodulation der Halbbrückenwechselrichterausgangsspannung, d. h., des Lampenstroms, wird nach Beendigung der Testphase nur noch innerhalb des neuen Frequenzintervalls, in diskreten Frequenzschritten, mit den vorgenannten Testfrequenzen durchgeführt.

Die oben beschriebene Sensoreinheit eignet sich nicht dazu, während der Testphase ein Verlöschen der Lampe, hervorgerufen durch starke akustische Resonanzen, zu verhindern. Hierfür wird eine separate Lampen-Lösch-Erkennungseinheit benötigt. Die Lampen-Lösch-Erkennungseinheit ist über den Abgriff A2 mit dem Koppelkondensator C6 verbunden. Sie besteht im wesentlichen aus dem als Komparator verschalteten Operationsverstärker IC3. Am nicht-invertierenden Eingang des Komparators IC3 liegt die gleichgerichtete, heruntergeteilte Spannung des Koppelkondensators C6 an. Insbesondere ist dieses Signal mit den mittelfrequentem Anteil der Testfrequenz und mit der von der Netzspannungsgleichrichtung verursachten 100 Hz-Welligkeit behaftet. Der invertierende Eingang des Komparators IC3 wird mit einer Referenzspannung gespeist, die ebenfalls, wie die Koppelkondensatorspannung, mit der 100 Hz-Welligkeit der Zwischenkreiskondensatorspannung behaftet ist.

Ist die Amplitude des Komparatoreingangssignals größer als die am invertierenden Eingang anliegende Referenzspannung, so erzeugt der Komparator IC3 an seinem Ausgang, der mit dem Eingang 6 des Mikrocontrollers MC verbunden ist, eine High-Flanke und beim Unterschreiten der Referenzspannunng eine Low-Flanke. Bei verlöschender Lampe LP sinkt die Spannung am Koppelkondensator C6 unter den Wert der am invertierenden Eingang des Komparators IC3 anliegenden Referenzspannung. Das Ausbleiben von High- und Low-Flanken an seinem Eingang 6 über mehrere Signalperioden dient dem Mikrocontroller MC als Hinweis für eine verlöschende Lampe. Der Mikrocontroller MC schaltet daraufhin in den frequenzmodulierten "Normalbetrieb" um und setzt, nach ca. 5 s, die Testphase mit einer anderen Testfrequenz fort.

Da die Spannung am Koppelkondensator C6 mit zunehmender Betriebsfrequenz abnimmt, kann nicht für alle Testfrequenzen mit demselben Referenzsignal am invertierenden Eingang des Komparators IC3 gearbeitet werden. Die Referenzspannung setzt sich aus drei Komponenten zusammen. Die erste Komponente der Referenzspannung wird mittels der Hilfsspannungsquelle U3 und des Spannungsteilers R17, R19, R20 erzeugt, auf die am Abgriff A3 die zweite, vom Ausgang 2 des Mikrocontrollers MC zugeführte Signalkomponente addiert wird. Vom Pluspol des Zwischenkreiskondensators C3 wird die durch die Netzspannungsgleichrichtung verursachte 100 Hz-Rippelspannung ausgekoppelt und über den Verknüpfungspunkt V5 sowie über den als Verstärker verschalteten Operationsverstärker IC4 und über den Kondensator C11 der Referenzspannung am Abgriff A3 als dritte Komponente aufaddiert. Damit bei den höheren Testfrequenzen die Referenzspannung nicht größer als die Signalspannung ist, wird die Referenzspannung bei ca. 22 kHz einmalig angepaßt. Das heißt, für Testfrequenzen oberhalb von ca. 22 kHz schaltet der Mikrocontroller MC die von seinem Ausgang 2 zugeführte zweite Komponente des Referenzsignal ab, so daß sich die Referenzspannung am invertierenden Eingang des Komparators IC3 nur noch aus zwei Komponenten zusammensetzt.

Am Analogeingang 4 des Mikrocontrollers MC liegt über den Verknüpfungspunkt V4 sowie einen Spannungsteiler R5, R6 die Spannung des Koppelkondensators C6 an. Diesen Wert vergleicht der Mikrocontroller intern, im Verlauf eines regelmäßig sich wiederholenden Unterprogrammes, mit einem Referenzsignal, um zu ermitteln ob die Lampe LP brennt.

**Tabelle I**

| Eigenschaften des in den Ausführungsbeispielen verwendeten ST6265-Mikrocontrollers |
|---|
| 8 MHz Taktfrequenz |
| Harvard-Architektur mit Registerstack |
| 3,8 Kbyte User ROM |
| 64 byte Data-ROM |
| 128 byte Data-RAM |
| 128 byte EEPROM |
| 21 programmierbare I/O-Ports |
| 8 bit-Timer |
| Autoreload-Timer |
| Digital-Watchdog |
| 8 bit-A/D-Converter |
| 4 Interruptvektoren. |

**Tabelle II**

| Dimensionierung der im ersten Ausführungsbeispiel verwendeten elektronischen Bauteile | |
|---|---|
| C1 | 10 pF |
| C2 | 150 nF |
| C3 | 22 µF |
| C4 | 470 pF |
| C5 | 1,5 nF |
| C6 | 0,22 µF |
| C7 | 10 nF |
| C8, C10 | 100 nF |
| C9, C11 | 1 µF |
| C12 | 2 µF |
| R1, R7, R9, R19 | 100 KΩ |
| R2 | 4,7 MΩ |
| R4 | 47 Ω |
| R5, R6 | 620 KΩ |
| R8, R14, R15, R16, R17, R23, R24 | 10 KΩ |
| R10 | 392 KΩ |
| R11 | 150 KΩ |
| R12 | 1 KΩ |
| R13 | 56,2 KΩ |
| R18 | 9,8 KΩ |
| R20 | 2,2 KΩ |
| R21 | 121 KΩ |
| R22 | 81,8 KΩ |
| U2, U3, U5 | 5 V |
| IC1 | IR2111 |
| IC2, IC4 | LM324 |
| IC3 | LM393 |
| T2, T3 | IRF840 |
| Q1, Q2 | BC327 |
| D6, D7, D8 | 1N4148 |
| MC | ST6265 von SGS Thomson |

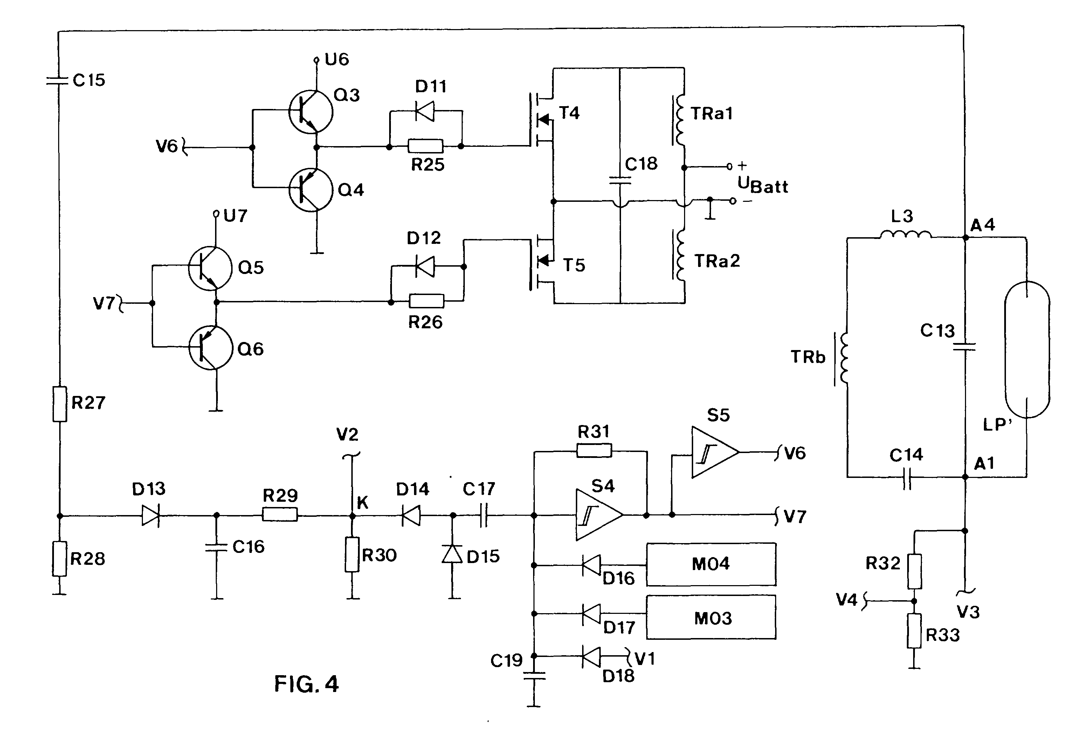

Die Figuren 3 und 4 zeigen die Vernetzung des ST6265-Mikrocontrollers mit der erfindungsgemäßen Schaltungsanordnung anhand des zweiten bevorzugten Ausführungsbeispiels. Diese Schaltungsanordnung dient zum Betrieb von Kraftfahrzeug-Scheinwerfer-Hochdruckentladungslampen LP' und wird von der Kraftfahrzeug-Batterie mit einer Gleichspannung von 12 V oder 24 V versorgt. Die Schaltungsanordnung gemäß des zweiten Ausführungsbeipiels weist einen fremdgesteuerten Halbbrückenwechselrichter WR mit zwei alternierend schaltenden Feldeffekttransistoren T4, T5 auf. Die Drain-Anschlüsse beider Feldeffekttransistoren T4, T5 sind jeweils über eine Primärwicklung TRal beziehungsweise TRa2 eines Transformators mit dem positiven Pol der Batterie U_{Batt} verbunden, während die Source-Anschlüsse beider Feldeffekttransistoren T4, T5 zum auf Massepotential liegenden Minuspol der Batterie U_{Batt} geführt sind. Parallel zu den Schaltstrecken der Halbbrückentransistoren T4, T5 und zu den beiden Primärwicklungen TRal, TRa2 ist ein Kondensator C18 geschaltet. Die Sekundärwicklung TRb des Transformators ist in einen LC-Kreis integriert, der neben der Sekundärwicklung TRb, in Serie dazu, noch eine Induktivität L3 und zwei Kondensatoren C13, C14 aufweist. Die Kfz-Hochdruckentladungslampe LP' ist parallel zum Kondensator C13 geschaltet. Die alternierend schaltenden Transistoren T4, T5 erzeugen über die induktive Kopplung der Primärwicklungen TRal, TRa2 zu der Sekundärwicklung TRb des Transformators im LC-Kreis eine mittelfrequente Wechselspannung. Die Frequenz dieser Wechselspannung ist durch den Schalttakt des Halbbrückenwechselrichters T4, T5 festgelegt und liegt oberhalb von 20 kHz. Während der Zündphase wird die Schaltfrequenz des Halbbrückenwechselrichters T4, T5 der Resonanzfrequenz des LC-Kreises angenähert, so daß am Kondensator C13 mittels Resonanzüberhöhung die zur Zündung der Lampe LP' erforderliche Spannung anliegt, die ausreicht, um die Entladung selbst dann zu zünden, wenn die Lampe LP' noch heiß ist. Nach erfolgter Zündung der Lampe LP' wird die Methode der Resonanzüberhöhung ausgenutzt, um im LC-Kreis eine Lampenbrennspannung von ca. 90 V zu gewährleisten. Die Ansteuerung der Gate-Elektroden der Feldeffekttransistoren T4, T5 erfolgt mit Hilfe des Mikrocontrollers MC und der Leistungsregelungseinheit M03 sowie der Spannungsregelungseinheit M04 über die Anschlüsse V6, V7. Entscheidend für das Schaltverhalten des Halbbrückenwechselrichters T4, T5 ist der Ladezustand des Kondensators C17, der einerseits über einen ersten Schmitt-Trigger T4 und dessen Parallelwiderstand R31 sowie den Verbindungspunkt V7 zum Gate des Feldeffekttransistors T5 und andererseits über einen zweiten, dem ersten Schmitt-Trigger S4 nachgeschalteten Schmitt-Trigger S5 sowie den Verbindungspunkt V6 zum Gate des Feldeffekttransistors T4 geführt ist. Die Spannungsregelungseinheit M04, die Leistungsregelungseinheit M03 und der Port 1 des Mikrocontrollers MC sind über in Form einer ODER-Schaltung angeordnete Dioden D16, D17 bzw. D18 mit dem Eingang des ersten Schmitt-Triggers S4 und mit einem Pol des Kondensators C17 verbunden. Der andere Pol des Kondensators C17 ist über die in Durchlaßrichtung gepolte Diode D14, den Knotenpunkt K und den Widerstand R30 an Masse gelegt. Der Knotenpunkt K ist mit dem Ausgang 3 des Auto-Reload-Timers des Mikrocontrollers MC verbunden. Die Anschlüsse V1, V2, V3, V4 der Figur 4 sind identisch mit den gleichnamigen Anschlüssen der Figur 3. Sie definieren die Vernetzung der in den Figuren 3, 4 dargestellten Schaltungsanordnung gemäß des zweiten Ausführungsbeispiels. Der Anschluß A4 zwischen der Induktivität L3 und dem Kondensator C13 im LC-Kreis ist über einen Kondensator C15, einen Spannungsteiler R27, R28, eine in Vorwärtsrichtung gepolte Diode D13 und einen Widerstand R29 mit dem Knotenpunkt K verbunden. Die Anode der Diode D13 ist über einen Kondensator C16 an Masse gelegt. Die Kathode der Diode D14 ist über eine in Sperrichtung geschaltete Diode D15 mit Masse verbunden. Der Eingang des Schmidt-Triggers S4 und die Anoden der Dioden D16, D17, D18 sind über einen Kondensator C19 an Masse gelegt. Zwischen dem Ausgang des ersten Schmidt-Triggers S4 und dem Gate des Feldeffekttransistors T5 ist ein von einer Hilfsspannungsquelle U6 gespeister Totem-Polverstärker Q5, Q6 und eine Parallelanordnung eines Widerstandes R26 und einer Diode D12 geschaltet. Analog dazu ist auch zwischen dem Ausgang des zweiten Schmidt-Triggers S5 und dem Gate des Feldeffekttransistors T4 ein von einer Hilfsspannungsquelle U7 gespeister Totem-Polverstärker Q3, Q4 und eine Parallelanordnung eines Widerstandes R25 und einer Diode D11 geschaltet. Die am Abgriff A1 im LC-Kreis angeschlossenen Spannungsteilerwiderstände R32, R33 haben die gleiche Funktion wie die im ersten Ausführungsbeispiel beschriebenen Widerstände R5, R6 (Fig. 2).

Zwischen der Funktionsweise der Schaltungsanordnung gemäß des ersten und zweiten Ausführungsbeispiels bestehen nur geringfügige Unterschiede.

So regelt die Spannungsregelungseinheit MO4 die Eingangspannung des Halbbrückenwechselrichters T4, T5 und schaltet diesen bei Unterspannung ab. Die Leistungsregelungseinheit MO3 ist identisch aufgebaut wie die des ersten Ausführungsbeispiels. Wie bereits oben erwähnt bestimmt der Ladezustand des Kondensators C17 den Ein- bzw. Ausschaltzeitpunkt und die Ein- bzw. Ausschaltdauer der Feldeffekttransistoren T4, T5. Befindet sich der Kondensator C17 beispielsweise auf dem Potential High, so liegt das Gate des Transistors T4, nach zweimaliger Inversion des Signals durch die Schmitt-Trigger S4, S5, ebenfalls auf dem Potential High, während am Gate des Transistors T5 ein Low-Potential anliegt. Die Schaltstrecke des Transistors T4 ist somit niederohmig, während die des Transistors T5 hochohmig ist.

Der Ein- bzw. Ausschaltzeitpunkt der Transistoren T4, T5 wird durch das Potential im Knotenpunkt K festgelegt, das seinerseits vom über den Verbindungspunkt V2 eingekoppelten Pulsweitenmodulationssignal des Auto-reload-Timers 3 und vom RC-Glied C15, R27, R28, das im Knotenpunkt A4 den Nulldurchgang des Drosselstromes der Drossel L3 detektiert, abhängt. Die Ein- bzw. Ausschaltdauer der Transistoren T4, T5 ist durch die Ladezeit des Kondensators C17 bestimmt.

Über den Knotenpunkt A1 im LC-Kreis und die Verbindungspunkte V3, V4 ist der LC-Kreis mit den in Figur 3 dargestellten Bauelementen der Schaltungsanordnung verbunden. Die Funktionsweise dieser Bauelemente wurde bereits bei der Erläuterung des ersten Ausführungsbeispiels beschrieben. Hier gibt es keine Unterschiede zwischen den beiden Ausführungsbeispielen.

## Patentansprüche

1. Verfahren zum Betrieb einer Entladungslampe an einem Vorschaltgerät, wobei die Entladungslampe mit einem frequenzmodulierten Wechselstrom versorgt wird, dessen Frequenz während des Lampenbetriebes in einem vorgegebenen Frequenzbereich variiert wird,
dadurch gekennzeichnet, daß eine Testphase durchgeführt wird, während der die für den stabilen Lampenbetrieb günstigen Wechselstromfrequenzen ermittelt werden, indem
- die Frequenz des Lampenstroms innerhalb des vorgegebenen Frequenzbereiches in diskreten Schritten variiert wird, wobei jede zu testende Wechselstromfrequenz für eine gewisse Zeitspanne beibehalten wird, und
- währenddessen eine für den stabilen Lampenbetrieb charakteristische elektrische Größe überwacht wird, und
- in Abhängigkeit von den Schwankungen dieser elektrischen Größe die eingestellte Wechselstromfrequenz als für den Lampenbetrieb günstig oder ungünstig bewertet wird, und
- die Bewertung der getesteten Wechselstromfrequenzen gespeichert wird,
- und ein neuer Frequenzbereich bestimmt wird, der ausschließlich Wechselstromfrequenzen enthält, die für den stabilen Lampenbetrieb als günstig bewertet wurden.

2. Verfahren nach Anspruch 1, dadurch gekennzeichnet, daß die charakteristische elektrische Größe der Lampenstrom ist.

3. Verfahren nach Anspruch 1, dadurch gekennzeichnet, daß die Entladungslampe nach Beendigung der Testphase mit einem frequenzmodulierten Wechselstrom versorgt wird, dessen Frequenzmodulation nur mit den Frequenzen des neuen Frequenzbereiches durchgeführt wird.

4. Verfahren nach Anspruch 1, dadurch gekennzeichnet, daß der neue Frequenzbereich durch den größten zusammenhängenden Bereich von für den stabilen Lampenbetrieb als günstig bewerteten Wechselstromfrequenzen gebildet wird.

5. Verfahren nach Anspruch 1, dadurch gekennzeichnet, daß die Entladungslampe an einem fremdgesteuerten Wechselrichter betrieben wird und das Variieren der Wechselstromfrequenz in diskreten Schritten mit Hilfe eines programmierbaren Mikrocontrollers durchgeführt wird, der Pulsweitenmodulationssignale für den Wechselrichter generiert.

6. Verfahren nach Anspruch 1, dadurch gekennzeichnet, daß die für den stabilen Lampenbetrieb charakteristische elektrische Größe mit Hilfe einer Sensoreinheit überwacht wird, die die niederfrequenten Schwankungen des Lampenstroms erfaßt.

7. Verfahren nach Anspruch 1, dadurch gekennzeichnet, daß mit Hilfe des Mikrocontrollers für jede eingestellte Wechselstromfrequenz programmgesteuert eine Auswertung der von der Sensoreinheit erfaßten niederfrequenten Schwankungen des Lampenstroms durchgeführt wird, und im Mikrocontroller für jede eingestellte Wechselstromfrequenz in Abhängigkeit von ihrer Bewertung für den stabilen Lampenbetrieb ein Bit eines Speicher-Registers auf den entsprechenden Wert gesetzt wird.

8. Verfahren nach Anspruch 5, dadurch gekennzeichnet, daß im Programm des Mikrocontrollers zur Bewertung der getesteten Wechselstromfrequenzen und zur Speicherung der Bewertung für jede eingestellte Wechselstromfrequenz ein dieser Wechselstromfrequenz zugeordnetes Bit in Abhängigkeit von der Bewertung auf den Wert "0" oder "1" gesetzt wird.

9. Schaltungsanordnung zum Betrieb einer Entladungslampe mit folgenden Merkmalen:
- einen fremdgesteuerten Wechselrichter (WR) mit einem nachgeschalteten LC-Ausgangskreis (RK), in den ein Koppelkondensator (C6) und die Entladungslampe (LP) geschaltet sind, und der die Entladungslampe (LP) mit einem frequenzmodulierten Wechselstrom, dessen Frequenz während des Betriebs in einem vorgegebenen Frequenzbereich variiert wird, versorgt,
- einen programmierbaren Mikrocontroller (MC) zur Ansteuerung des Wechselrichters (WR),
dadurch gekennzeichnet, daß
- die Schaltungsanordnung eine Sensoreinheit (C7, R7, R8, D8, C8, C9, R9, R10, IC2, R11-R14, U2) zur Überwachung der als Indikator für einen flimmerfreien Lampenbetrieb dienenden Spannung am Koppelkondensator (C6) aufweist,
- der Mikrocontroller (MC) mit einem Programm zur Variation der Frequenz des Lampenstroms innerhalb des vorgegebenen Frequenzbereichs in diskreten Frequenzschritten in einer Testphase, wobei jede zu testende Wechselstromfrequenz für eine gewisse Zeitspanne bei behalten wird, und zur Ermittlung von für den flimmerfreien Lampenbetrieb günstigen Wechselstromfrequenzen, durch Bewertung der zu testenden Frequenz, in Abhängigheit des Indikators als günstig oder ungünstig, und Bestimmung eines neuen Frequenzbereichs, der ausschließlich Wechselstromfrequenzen enthält, die als günstig bewertet wurden, versehen ist,
- der Mikrocontroller (MC) einen Speicher zur Speicherung der für den flimmerfreien Lampenbetrieb günstigen Wechselstromfrequenzen besitzt.

10. Schaltungsanordnung nach Anspruch 9, dadurch gekennzeichnet, daß die Sensoreinheit ein Bandpaßfilter (R9, C8, C9, R10) enthält, das für niederfrequente Spannungen, insbesondere im Frequenzbereich von 0,5 Hz bis 15 Hz durchlässig ist.

11. Schaltungsanordnung nach Anspruch 9, dadurch gekennzeichnet, daß die Schaltungsanordnung eine Lampen-Lösch-Erkennungseinheit aufweist, die einen als Komparator verschalteten Operationsverstärker (IC3) enthält.

## Claims

1. Method of operating a discharge lamp using a ballast, in which the discharge lamp is supplied with a frequency-modulated alternating current whose frequency is varied in a given frequency range during the lamp operation,
characterized in that a test phase is carried out during which the alternating-current frequencies conducive to stable lamp operation are determined by
- varying the frequency of the lamp current in discrete steps within the given frequency range, with each alternating-current frequency to be tested being maintained for a certain time period, and
- during this, monitoring an electrical quantity which is characteristic of stable lamp operation, and
- depending on the fluctuations in this electrical quantity, assessing the set alternating-current frequency as conducive or unconducive to lamp operation, and
- storing the assessment of the tested alternating-current frequencies,
- and determining a new frequency range containing only alternating-current frequencies which have been assessed as conducive to stable lamp operation.

2. Method according to Claim 1, characterised in that the characteristic electrical quantity is the lamp current.

3. Method according to Claim 1, characterized in that, after the test phase has ended, the discharge lamp is supplied with a frequency-modulated alternating current, whose frequency modulation is carried out only using the frequencies in the new frequency range.

4. Method according to Claim 1, characterized in that the new frequency range is formed by the largest cohesive range of alternating-current frequencies assessed as conducive to stable lamp operation.

5. Method according to Claim 1, characterized in that the discharge lamp is operated using an externally controlled invertor, and the alternating-current frequency is varied in discrete steps using a programmable microcontroller which generates pulse-width modulation signals for the invertor.

6. Method according to Claim 1, characterized in that the electrical quantity which is characteristic of stable lamp operation is monitored using a sensor unit which detects the low-frequency fluctuations in the lamp current.

7. Method according to Claim 1, characterized in that the microcontroller is used to evaluate, under program control, for each set alternating-current frequency, the low-frequency fluctuations in the lamp current which are detected by the sensor unit, and a bit of a storage register is set to the appropriate value in the microcontroller for each set alternating-current frequency, depending on its assessment for stable lamp operation.

8. Method according to Claim 5, characterized in that the microcontroller's program for assessing the tested alternating-current frequencies and for storing the assessment sets, for each set alternating-current frequency, a bit allocated to this alternating-current frequency to the value "0" or "1", depending on the assessment.

9. Circuit arrangement for operating a discharge lamp, having the following features:
- an externally controlled invertor (WR) having a downstream-connected LC output circuit (RK) to which a coupling capacitor (C6) and the discharge lamp (LP) are connected and which supplies the discharge lamp (LP) with a frequency-modulated alternating current whose frequency is varied in a given frequency range during operation,
- a programmable microcontroller (MC) for driving the invertor (WR),
characterized in that
- the circuit arrangement has a sensor unit (C7, R7, R8, D8, C8, C9, R9, R10, IC2, R11-R14, U2) for monitoring the voltage across the coupling capacitor (C6), which voltage is used as an indicator for flicker-free lamp operation,
- the microcontroller (MC) is provided with a program for varying the frequency of the lamp current in discrete frequency steps within the given frequency range in a test phase, with each alternating-current frequency which is to be tested being maintained for a certain time period, and for determining alternating-current frequencies conducive to flicker-free lamp operation, by assessing the frequency which is to be tested as conducive or unconducive, depending on the indicator, and determining a new frequency range containing only alternating-current frequencies which have been assessed as conducive,
- the microcontroller (MC) has a memory for storing the alternating-current frequencies conducive to flicker-free lamp operation.

10. Circuit arrangement according to Claim 9,
characterized in that the sensor unit contains a bandpass filter (R9, C8, C9, R10) which passes low-frequency voltages, particularly in the frequency range from 0.5 Hz to 15 Hz.

11. Circuit arrangement according to Claim 9,
characterized in that the circuit arrangement has a lamp-extinguishment detection unit which contains an operational amplifier (IC3) connected as a comparator.

## Revendications

1. Procédé pour faire fonctionner une lampe à décharge sur un ballast, la lampe à décharge étant alimentée en un courant alternatif modulé en fréquence dont on fait varier la fréquence pendant le fonctionnement de la lampe dans une plage de fréquence prescrite,
caractérisé en ce que l'on effectue une phase de test pendant laquelle on détermine les fréquences de courant alternatif favorables pour le fonctionnement stable de la lampe,
- en faisant varier la fréquence du courant de la lampe à l'intérieur de la plage de fréquences prescrite par étapes discrètes, chaque fréquence de courant alternatif à tester étant conservée pour un certain laps de temps, et
- en surveillant pendant ce temps une grandeur électrique caractéristique du fonctionnement stable de la lampe, et
- en évaluant en fonction des fluctuations de cette grandeur électrique la fréquence de courant alternatif réglée comme favorable ou défavorable pour le fonctionnement de la lampe, et
- en mémorisant l'évaluation des fréquences de courant alternatif testées,
- et en déterminant une nouvelle plage de fréquences, qui contient exclusivement des fréquences de courant alternatif qui ont été évaluées comme favorables pour le fonctionnement stable de la lampe.

2. Procédé suivant la revendication 1, caractérisé en ce que la grandeur électrique caractéristique est le courant de la lampe.

3. Procédé suivant la revendication 1, caractérisé en ce que l'on alimente la lampe à décharge après achèvement de la phase de test en un courant alternatif modulé en fréquence, dont on effectue la modulation de fréquence qu'avec les fréquences de la nouvelle plage de fréquences.

4. Procédé suivant la revendication 1, caractérisé en ce la nouvelle plage de fréquences est formée par la plus grande plage continue de fréquences de courant alternatif évaluées comme favorables pour le fonctionnement stable de la lampe.

5. Procédé suivant la revendication 1, caractérisé en ce que l'on fait fonctionner la lampe à décharge sur un onduleur commandé de l'extérieur et en ce que l'on fait varier la fréquence du courant alternatif par étapes discrètes à l'aide d'un microcontrôleur programmable qui génère des signaux de modulation de largeur d'impulsions pour l'onduleur.

6. Procédé suivant la revendication 1, caractérisé en ce que l'on surveille la grandeur électrique caractéristique du fonctionnement stable de la lampe à l'aide d'une unité de capteur, qui détecte les fluctuations en basse fréquence du courant de la lampe.

7. Procédé suivant la revendication 1, caractérisé en ce que l'on effectue à l'aide du microcontrôleur, pour chaque fréquence de courant alternatif réglée, de manière commandée par programme, une évaluation des fluctuations du courant de la lampe en basse fréquence détectée par l'unité de capteur et en ce que l'on met dans le microcontrôleur, pour chaque fréquence de courant alternatif réglée, en fonction de son évaluation pour le fonctionnement stable de la lampe, un bit d'un registre de mémoire à la valeur correspondante.

8. Procédé suivant la revendication 5, caractérisé en ce que l'on met dans le programme du microcontrôleur, pour l'évaluation des fréquences de courant alternatif testées et la mémorisation de l'évaluation pour chaque fréquence de courant alternatif réglée, un bit associé à cette fréquence de courant alternatif en fonction de l'évaluation à la valeur "0" ou "1".

9. Montage pour faire fonctionner une lampe à décharge comportant les caractéristiques suivantes :
- un onduleur (WR) commandé de l'extérieur, comportant un circuit (RK) de sortie LC en aval, dans lequel un condensateur (C6) de couplage et la lampe (LP) à décharge sont branchés, et alimentant la lampe (LP) de décharge en un courant alternatif modulé en fréquence dont la fréquence varie pendant le fonctionnement dans une plage de fréquences prescrite,
- un microcontrôleur (MC) programmable pour commander l'onduleur (WR),
caractérisé en ce que
- le montage comporte une unité (C7, R7, R8, D8, C8, C9, R9, R10, IC2, R11 à R14, U2) de capteur pour surveiller la tension aux bornes du condensateur (C6) de couplage servant d'indicateur d'un fonctionnement exempt de papillotements de la lampe,
- le microcontrôleur (MC) est muni d'un programme pour faire varier la fréquence du courant de la lampe à l'intérieur de la plage de fréquences prescrite par des étapes de fréquences discrètes dans une phase de test, chaque fréquence de courant alternatif à tester étant conservée pour un certain laps de temps, et pour déterminer des fréquences de courant alternatif favorables pour le fonctionnement exempt de papillotements de la lampe par évaluation comme favorable ou défavorable, en fonction de l'indicateur, de la fréquence à tester et par détermination d'une nouvelle plage de fréquences qui contient exclusivement des fréquences de courant alternatif qui ont été évaluées comme favorables,
- le microcontrôleur (MC) a une mémoire pour mémoriser les fréquences de courant alternatif favorables au fonctionnement exempt de papillotements de la lampe.

10. Montage suivant la revendication 9, caractérisé en ce que l'unité de capteur contient un filtre passe-bas (R9, C8, C9, R10) passant pour les tensions basses fréquences, notamment dans la plage de fréquences de 0,5 Hz à 15 Hz.

11. Montage suivant la revendication 9, caractérisé en ce que le montage comporte une unité de reconnaissance d'extinction de la lampe, qui contient un amplificateur (IC3) opérationnel branché en comparateur.
